# EUROPÄISCHE PATENTSCHRIFT

(11) **EP 1 544 038 B1**
(45) Veröffentlichungstag und Bekanntmachung des Hinweises auf die Patenterteilung: **04.04.2007**
(21) Anmeldenummer: 04024801.5
(22) Anmeldetag: 19.10.2004
(51) Int. Cl.: B60R 1/076

(54) **Aussenrückblickspiegel für Fahrzeuge, insbesondere Personenkraftwagen**
Exterior rear view mirror for vehicles, in particular for passenger vehicles
Rétroviseur extérieur de véhicule, en particulier véhicule de passagers

(30) Priorität: 19.12.2003 DE 10359750
(43) Veröffentlichungstag der Anmeldung: 22.06.2005
(73) Patentinhaber: Dr. Ing. h.c. F. Porsche Aktiengesellschaft, 70435 Stuttgart (DE)
(72) Erfinder: Müller, Marcus, 75173 Pforzheim (DE)

(56) Entgegenhaltungen:
- EP-A- 0 340 944
- US-A- 4 740 066
- US-A- 4 840 475
- US-A- 5 477 391

## Beschreibung

Die Erfindung betrifft einen Außenrückblickspiegel für Fahrzeuge, insbesondere Personenkraftwagen gemäß dem Oberbegriff des Patentanspruchs 1.

Ein Außenrückblickspiegel muss aus Gesetzesgründen (zum Fußgängerschutz) nach vorne und hinten abklappbar sein. Trotz des Abklappmechanismus soll der Spiegelkopf in einer Fahrstellung des Außenrückblickspiegels so mit dem Spiegelfuß verbunden werden, dass Spiegelglasvibrationen vermieden werden.

Bei einem bekannten Fahrzeug (Mercedes E-Klasse) ist der Spiegelkopf über ein Zwischenglied mit dem Spiegelfuß verbunden und lässt sich über zwei Schwenkachsen abklappen. Zumindest ein quer zu den Schwenkachsen liegendes Federelement sorgt dafür, dass der Spiegelkopf in einer Fahrstellung des Außenrückblickspiegels in Richtung Spiegelfuß gespannt ist.

Bei dieser Anordnung ist der Spiegelkopf über das Zwischengelenk kraftübertragend mit dem Spiegelfuß verbunden. Um eine gelenkige Verbindung zwischen dem Zwischenglied und dem Spiegelfuß einerseits und dem Zwischenglied und dem Spiegelkopf andererseits sicherzustellen, müssen beide gelenkigen Verbindungen ein gewisses Spiel in den Gelenken aufweisen. Dieses Spiel an den kraftübertragenden Bauteilen führt dazu, dass im Fahrbetrieb fahrtwindbedingte Vibrationen am Spiegelkopf auftreten, die auf das Spiegelglas übertragen werden und die die Qualität des Spiegelbildes beeinträchtigen.

Die EP-A 0 340 944 zeigt einen Außenrückblickspiegel für Fahrzeuge, wobei der Spiegelkopf in seiner Fahrtstellung hauptsächlich über das Zwischengelenk und das Federelement kraftübertragend mit dem Spiegelfuß verbunden ist. Eine Rasteinrichtung zwischen dem Spiegelkopf und dem Spiegelfuß wird bei dieser Spiegelanordnung dadurch gebildet, dass eine äußere Anlagekante des Spiegelkopfes über ihrem gesamten Umfang in Eingriff mit dem Spiegelfuß steht. Da bei der Fertigung dieser beiden Bauteile stets Toleranzen auftreten, ist eine umlaufende spiel- und klapperfreie Anlage zwischen Spiegelkopf und Spiegelfuß nicht möglich. Dies führt zu einer statisch undefinierten Auflage des Spiegelkopfes am Spiegelfuß, wodurch fahrtwindbedingte Vibrationen an Spiegelkopf und Spiegelglas auftreten können, die die Qualität des Spiegelbildes beeinträchtigen.

Aufgabe der Erfindung ist es, an einem zweiachsigen Außenrückblickspiegel solche Vorkehrungen zu treffen, dass in der Fahrstellung des Außenrückblickspiegels eine äußerst steife, spielfreie Anbindung des Spiegelkopfes am Spiegelfuß erzielt wird, wobei jedoch die Verschwenkbarkeit des Spiegelkopfes im Kollisionsfall in beide Richtungen erhalten bleiben muss.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass durch die zwischen dem Spiegelkopf und dem Spiegelfuß vorgesehene, in mindestens zwei Ebenen wirksame zentrierende Rasteinrichtung eine äußerst steife, spielfreie Anbindung des Spiegelkopfs an den Spiegelfuß geschaffen wird, da in der Fahrstellung des Außenrückblickspiegels der Spiegelkopf lediglich über die Rasteinrichtung und das zumindest eine Federelement kraftübertragend mit dem Spiegelfuß verbunden ist. Das Zwischenglied wird bei der erfindungsgemäßen Anordnung nur zum Abklappen des Außenrückblickspiegels benötigt, nicht jedoch zur Kraftübertragung in der Fahrstellung.

Die aus mehreren räumlich aufeinander abgestimmten Rastelementen und korrespondierenden Rastaufnahmen gebildete Rasteinrichtung weist einen einfachen Aufbau auf, verursacht keine Mehrkosten und benötigt kaum zusätzlichen Bauraum, da sich die Bauteile der Rasteinrichtung benachbart und im Bereich des Zwischengliedes erstrecken. Durch die Anordnung von vorzugsweise sechs Rastelementen und sechs dazugehörigen Rastaufnahmen am Spiegelkopf bzw. am Spiegelfuß wird eine statisch eindeutig definierte Verbindung zwischen beiden räumlichen Bauteilen geschaffen. Durch die räumlich aufeinander abgestimmten schrägverlaufenden Anlageflächen an den Rastelementen und den Rastaufnahmen wird eine spiel- und klapperfreie Verbindung zwischen beiden Bauteilen sichergestellt und Fertigungs- bzw. Einbautoleranzen lassen sich in einfacher Weise kompensieren.

Durch die gegenläufige Ausbildung von jeweils zwei miteinander zusammenwirkenden Anlageflächen der Rastelemente bzw. der Rastaufnahmen erfolgt ein selbsttätiges räumliches Positionieren bzw. Zentrieren beider Bauteile zueinander, unabhängig von deren Toleranzlage. Durch die unmittelbare Verbindung von Spiegelkopf und Spiegelfuß entsteht eine kurze Toleranzkette. Dadurch können die toleranzausgleichenden Bauteile klein dimensioniert werden (z.B. Kragenabschnitt des Dichtkörpers). Da die Rasteinrichtung insbesondere in Fahrzeugquerrichtung keinen zusätzlichen Bauraum gegenüber dem Zwischenglied benötigt, ist sie auch für sogenannte Sprossenspiegel gut geeignet. Durch die steife Verbindung zwischen Spiegelkopf und Spiegelfuß kann die Verbindungsfläche reduziert werden, wodurch die Gestaltungsmöglichkeit diesem Bereich erhöht wird.

Ein Ausführungsbeispiel der Erfindung ist in den Figuren näher erläutert. Es zeigt
- Fig. 1: eine perspektivische Ansicht von schräg vorne auf einen Teilbereich eines Personenkraftwagens mit einem Außenrückblickspiegel,
- Fig. 2: in Explosionsdarstellung die wesentlichen Bauteile des Außenrückblickspiegels,

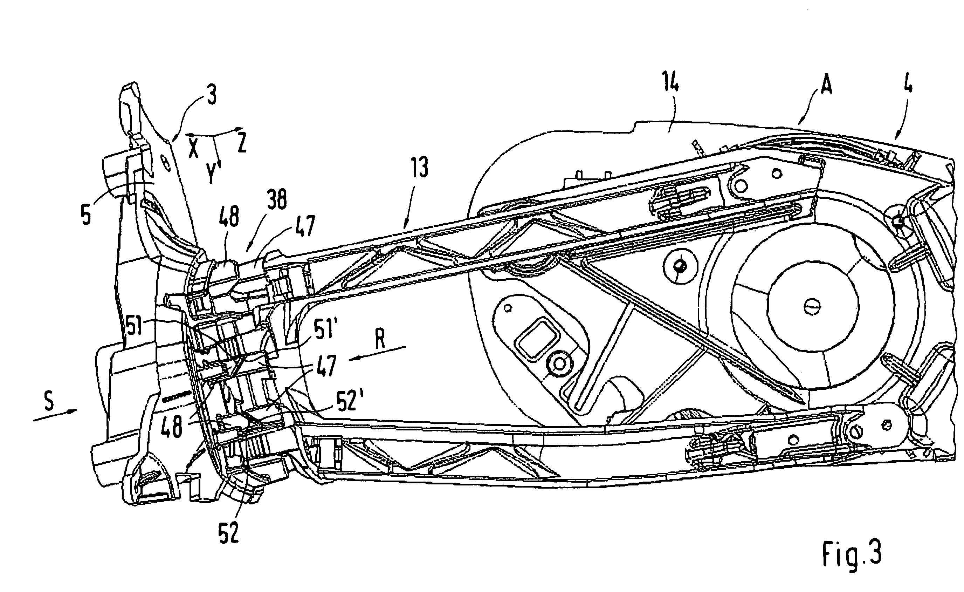

- Fig. 3: eine perspektivische Ansicht von schräg vorne auf den Spiegelfuß, den Spiegelkopf und die zwischengeschaltete Rasteinrichtung,

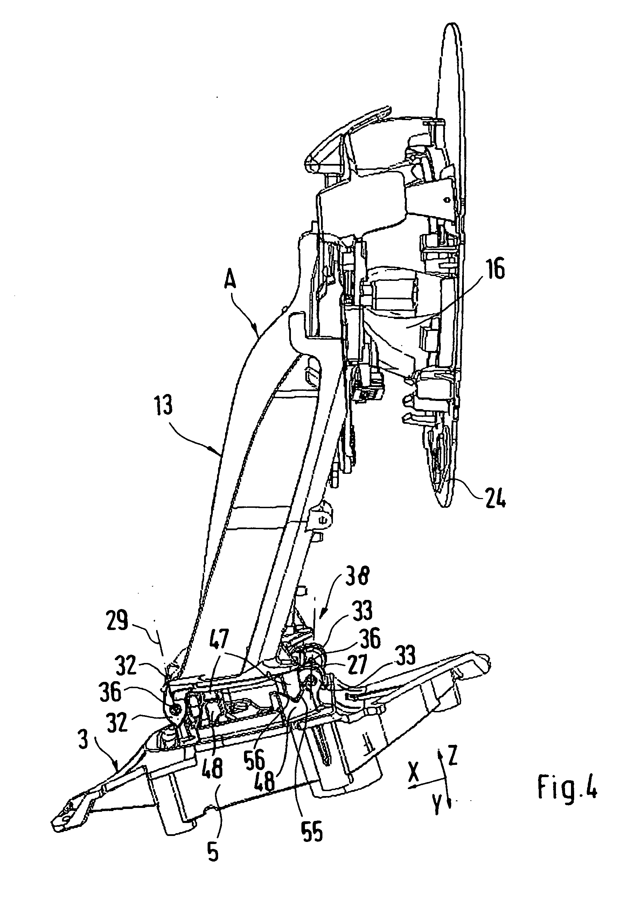

- Fig. 4: eine weitere perspektivische Ansicht auf den Spiegelfuß, den Spiegelkopf und die zwischengeschaltete Rasteinrichtung,
- Fig. 5: eine Ansicht in Pfeilrichtung R der Fig. 3 auf den Spiegelfuß,
- Fig. 6: einen Schnitt nach der Linie 6 - 6 der Fig. 5 in größerer Darstellung,
- Fig. 7: einen Schnitt nach der Linie 7 - 7 der Fig. 5 in größerer Darstellung,
- Fig. 8: eine Ansicht in Pfeilrichtung S der Fig. 3 auf das Rahmenteil des Spiegelkopfes,
- Fig. 9: eine Ansicht in Pfeilrichtung T der Fig. 8 auf das innere Rahmenteil des Spiegelkopfes und
- Fig. 10: einen horizontalen Schnitt durch den Außenrückblickspiegel.

Ein Außenrückblickspiegel 1 für ein Kraftfahrzeug, insbesondere einen Personenkraftwagen 2, setzt sich aus einem Spiegelfuß 3 und einem Spiegelkopf 4 zusammen. Im Ausführungsbeispiel besteht der Spiegelfuß 3 aus einem an der Fahrzeugkarosserie befestigten Tragteil 5 und einer von der Fahrzeugaußenseite her auf das Tragteil 5 aufgesetzten Spiegelfußblende 6. Das etwa dreieckförmig ausgebildete Tragteil 5 wird beispielsweise durch ein Druckgussteil gebildet, das mittels Schrauben an einem vorderen Spiegeldreieck 7 einer seitlichen Fahrzeugtür 8 befestigt ist. Die eine dreieckige Form aufweisende Spiegelfußblende 6 wird durch ein Kunststoffteil gebildet. Das Tragteil 5 und die Spiegelfußblende 6 können jedoch auch einstückig miteinander ausgebildet sein.

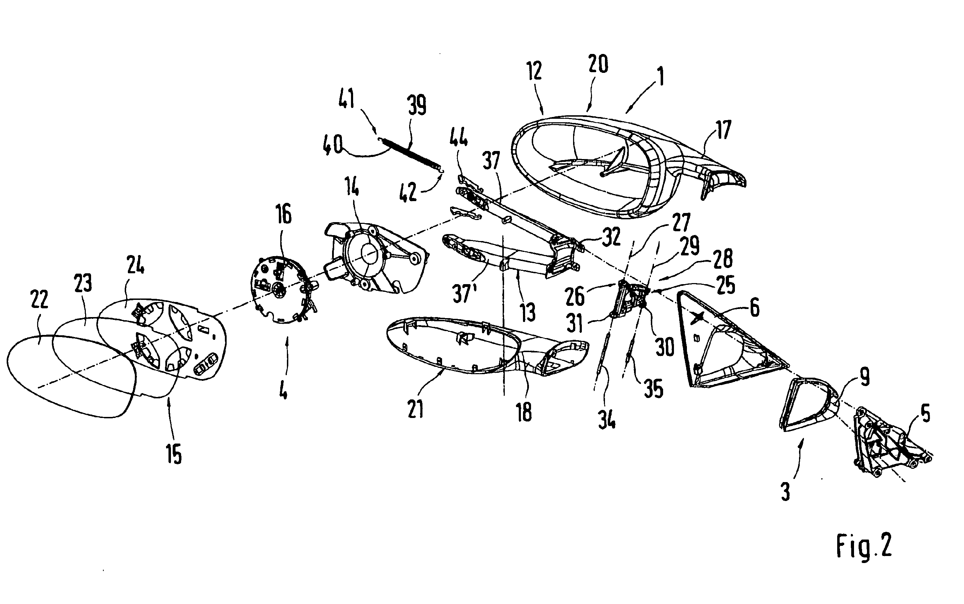

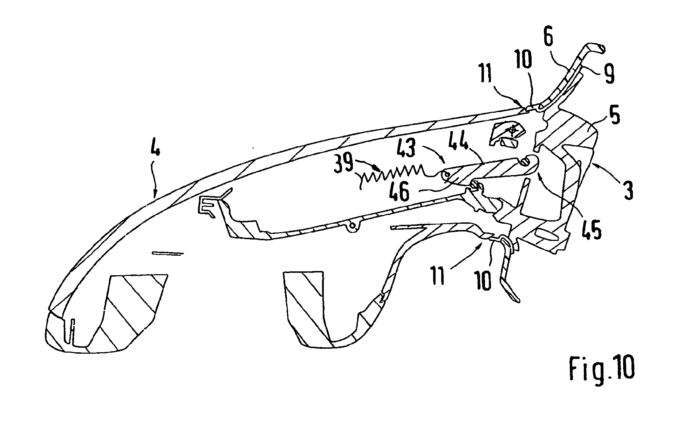

Zwischen dem Tragteil 5 und der Spiegelfußblende 6 ist ein umlaufender rahmenartiger Dichtkörper 9 vorgesehen, der mit einem endseitigen lippenartigen Kragenabschnitt 10 gegenüber der Spiegelfußblende 6 vorsteht, wobei am Kragenabschnitt 10 ein angrenzender Randbereich 11 des Spiegelkopfes 4 anliegt (Fig. 10). Der Spiegelkopf 4 setzt sich aus einem Spiegelgehäuse 12, einem zweiarmigen inneren Rahmenteil 13, einer Trägerplatte 14, einer Glasbaugruppe 15 und einem Verstellmechanismus 16 für die Glasbaugruppe 15 zusammen (Fig. 2).

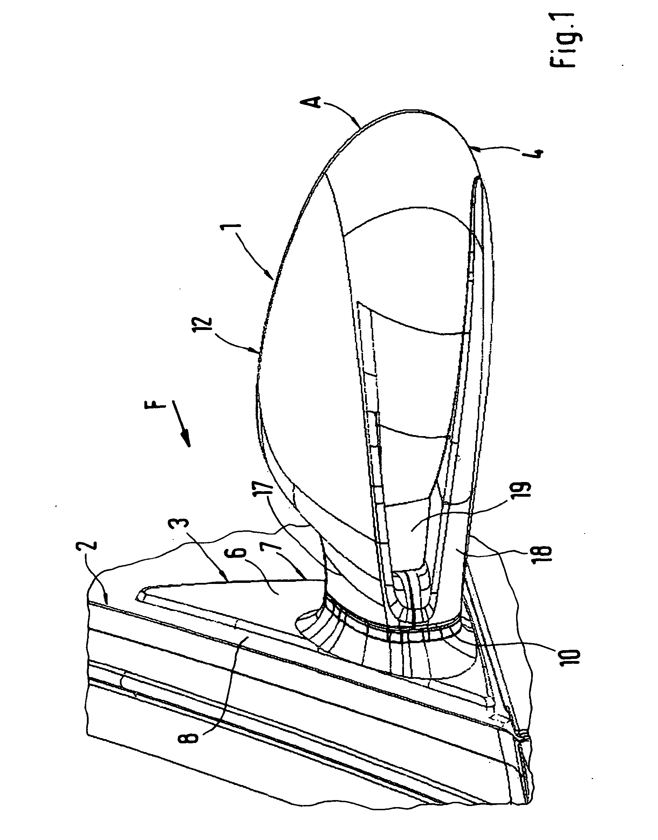

Im Ausführungsbeispiel ist der Außenrückblickspiegel 1 als sogenannter Sprossenspiegel ausgebildet, das heißt, das Spiegelgehäuse 12 ist über einen oberen Tragarm 17 und einen unteren Tragarm 18 an den angrenzenden Spiegelfuß 3 angeschlossen, wobei zwischen den beiden Tragarmen 17, 18 eine aerodynamisch geformte Durchtrittsöffnung 19 vorgesehen ist (Fig. 1).

Gemäß Fig. 2 ist das Spiegelgehäuse 12 zweiteilig ausgebildet, wobei der obere Tragarm 17 einem Oberteil 20 und der untere Tragarm 18 einem Unterteil 21 zugeordnet sind (Fig. 2). Oberteil 20 und Unterteil 21 sind örtlich miteinander verschraubt. Innerhalb des Spiegelgehäuses 12 ist das etwa U-förmige zweiarmige Rahmenteil 13 angeordnet, wobei an den beiden Schenkeln 37, 37' des Rahmenteils 13 die Trägerplatte 14 befestigt ist. Die Trägerplatte 14 nimmt den Verstellmechanismus 16 auf, an dem wiederum die Glasbaugruppe 15 in Lage gehalten ist. Die Glasbaugruppe 15 umfasst ein Spiegelglas 22, eine Heizfolie 23 und eine aus Kunststoff gefertigte Glasträgerplatte 24.

Der Spiegelkopf 4 ist in an sich bekannter Weise über ein rahmenartiges Zwischenglied 25 gelenkig mit dem Spiegelfuß 3 verbunden (Fig. 2). Ein Ende 26 des Zwischengliedes 25 ist über eine erste aufrechte Schwenkachse 27 gelenkig mit dem Spiegelfuß 3 und das andere Ende 28 des Zwischengelenks 25 ist über eine zweite aufrechte Schwenkachse 29 gelenkig mit dem Spiegelkopf 4 verbunden. Durch die Anordnung von zwei beabstandeten, aufrechten Schwenkachsen 27, 29 ist der dargestellte Außenrückblickspiegel 1 der Gattung der Zweiachsspiegel zuzuordnen. Die beiden aufrechten Schwenkachsen 27, 29 bewirken, dass der Spiegelkopf 4 bei einem Aufprall, das heißt bei Kontakt mit einem Gegenstand, sowohl nach vorne als auch nach hinten hin abklappbar ist (nicht dargestellte vordere und hintere Schwenkstellung).

Bei einem Stoß von vorne auf den Spiegelkopf 4 schwenkt dieser um die erste, hintenliegende Schwenkachse 27 nach hinten. Bei einem Stoß von hinten auf den Spiegelkopf 4 schwenkt dieser um die zweite, vorneliegende Schwenkachse 29 nach vorne. Die Fahrtrichtung F des Personenkraftwagens ist in Fig. 1 angegeben.

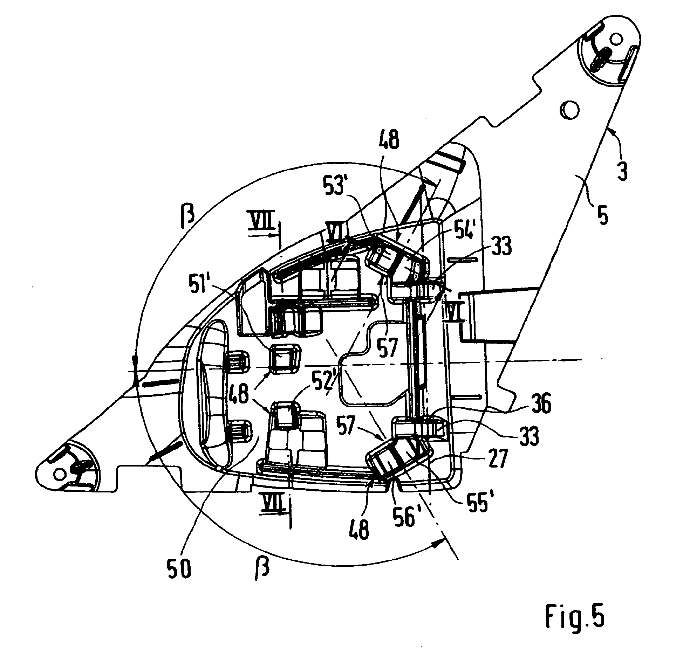

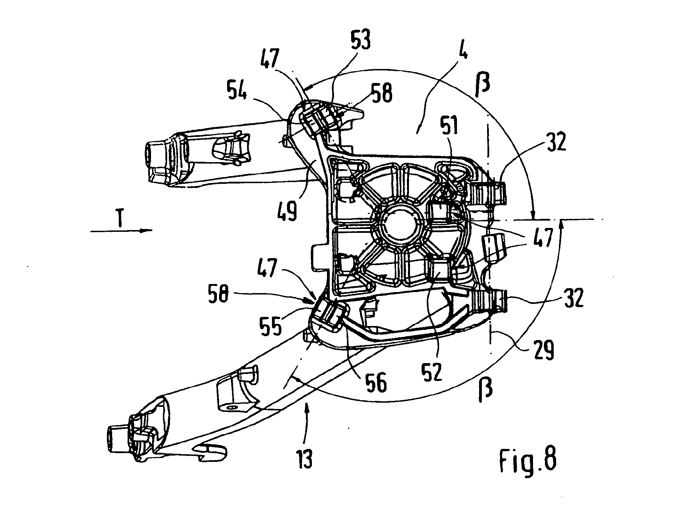

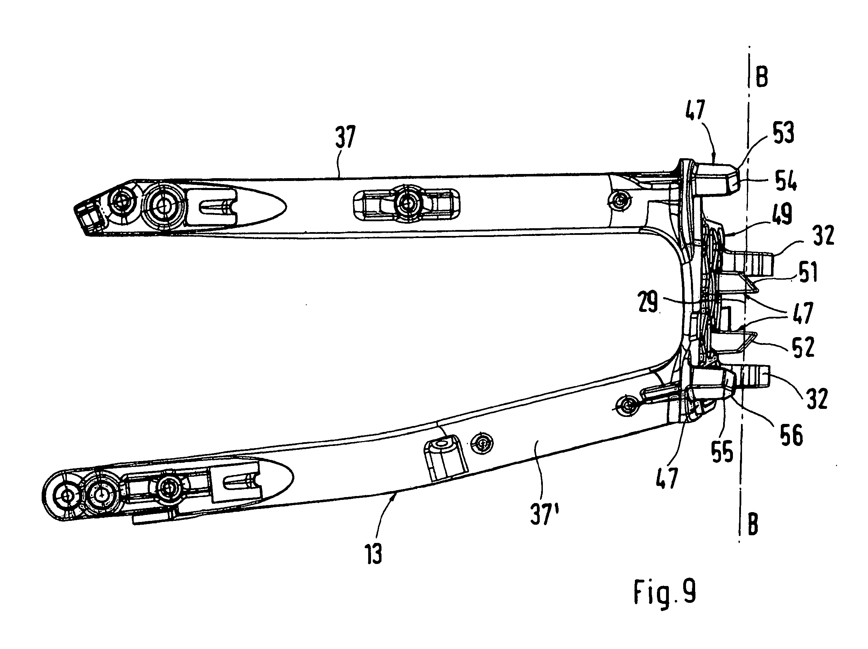

Zur Bildung der aufrechten Schwenkachsen 27, 29 sind an beiden Enden 26, 28 des Zwischenglieds 25 sowie am Spiegelfuß 3 und am Spiegelkopf 4 jeweils zwei in Höhenrichtung gesehen beabstandete Lageraugen 30, 31, 32, 33 vorgesehen, wobei in axialer Richtung gesicherte Gelenkbolzen 34, 35 jeweils durch alle vier übereinanderliegenden Lageraugen einer gelenkigen Verbindung hindurchgeführt sind. In Fig. 2 sind die beiden vorderen Lageraugen 30 und die hinteren Lageraugen 31 des Zwischenglieds 25, in den Fig. 8 und 9 die beiden übereinanderliegenden Lageraugen 32 des Spiegelkopfs 4 und in Fig. 5 die beiden Lageraugen 33 des Spiegelfußes 3 dargestellt. Die jeweiligen Durchgangsöffnungen an den Lageraugen 30 bis 33 für die Gelenkbolzen 34, 35 sind jeweils mit dem Bezugszeichen 36 bezeichnet.

Das Zwischenglied 25 und die ein relativ großes Spiel aufweisenden gelenkigen Verbindungen dienen im Ausführungsbeispiel nur zur Bereitstellung der Schwenkachsen 27, 29 im Kollisionsfall, jedoch nicht dazu, den Spiegelkopf 4 in einer Fahrstellung A vibrationsfrei in Lage zu halten.

Die vibrationsfreie Lagerung des Spiegelkopfes 4 in einer Fahrstellung A des Außenrückblickspiegels 1 wird dadurch erreicht, dass zwischen dem Spiegelkopf 4 und dem Spiegelfuß 3 eine zentrierende, in mindestens zwei Ebenen wirksame Rasteinrichtung 38 vorgesehen ist. Im Ausführungsbeispiel ist die Rasteinrichtung 38 in allen drei Ebenen (X-Y-Z-Ebene) wirksam.

Eine kraftübertragende Verbindung zwischen dem Spiegelkopf 4 und dem Spiegelfuß 3 erfolgt lediglich über die erfindungsgemäße Rasteinrichtung 38 und über zumindest ein quer zu den Schwenkachsen 27, 29 verlaufendes Federelement 39, das den Spiegelkopf 4 mit einer relativ hohen Kraft gegen den Spiegelfuß 3 drückt. Im Ausführungsbeispiel sind zwei in Höhenrichtung gesehen mit Abstand zueinander angeordnete Federelemente 39 vorgesehen. Jedes Federelement 39 wird durch eine Schraubenzugfeder 40 gebildet, deren eines Ende 41 an einem Schenkel 37, 37' des inneren Rahmenteiles 13 eingehängt ist. Das andere Ende 42 jeder Schraubenzugfeder 40 ist mit einem Ende 43 einer Rastklinge 44 verbunden, die wiederum mit ihrem anderen Ende 45 am Spiegelfuß 3 eingehängt ist. Die Rastklinge 44 verläuft unter einem stumpfen Winkel zur Schraubenzugfeder 40 und wirkt mit einer abgestellten Nase 46 bereichsweise mit dem Spiegelkopf 4 zusammen. Die Schraubenzugfeder 40 kann örtlich mit einer aus Gummi oder Kunststoff gefertigten Ummantelung versehen sein (nicht näher dargestellt).

Die erfindungsgemäße Rasteinrichtung 38 umfasst mehrere, räumlich aufeinander abgestimmte Rastelemente 47, die in der Fahrstellung A des Außenrückblickspiegels 1 in gegenseitigem Eingriff mit korrespondierenden Rastaufnahmen 48 stehen, wobei die Rastelemente 47 am Spiegelkopf 4 oder am Spiegelfuß 3 und die Rastaufnahmen 48 am jeweils anderen Bauteil angeordnet sind.

Im Ausführungsbeispiel sind die Rastelemente 47 am Spiegelkopf 4 und die Rastaufnahmen 48 am Spiegelfuß 3 vorgesehen. Die Rastelemente 47 und die Rastaufnahmen 48 sind jeweils einstückig mit dem zugeordneten Bauteil (Spiegelkopf 4, Spiegelfuß 3) ausgebildet. Die Rastelemente 47 sind gemäß den Fig. 8 und 9 am Rahmenteil 13 des Spiegelkopfes 4 angeordnet und zwar sind sie von einem aufrechten Wandabschnitt 49 des Rahmenteils 13 weggeführt und erstrecken sich querverlaufend in Richtung Spiegelfuß 3. Der aufrechte Wandabschnitt 49 des Rahmenteiles 13 verläuft etwa parallel zu einer aufrechten Hilfsebene B-B, die durch die beiden aufrechten Schwenkachsen 27, 29 hindurchgeführt ist.

Die Rastelemente 47 sind etwa rechtwinkelig zu dieser Hilfsebene B-B ausgerichtet. Der Spiegelfuß 3 weist einen außenliegenden aufrechten Wandabschnitt 50 auf, der ebenfalls etwa parallel zur Hilfsebene B-B verläuft. Von diesem spiegelfußseitigen Wandabschnitt 50 sind die Rastaufnahmen 48 querverlaufend in Richtung Spiegelkopf 4 weggeführt, wobei auch die Rastaufnahmen 48 etwa rechtwinkelig zur Hilfsebene B-B ausgerichtet sind.

Die Rastelemente 47 und die zugeordneten Rastaufnahmen 48 sind jeweils ständerartig ausgebildet und weisen an ihren freien Enden jeweils schrägverlaufende Anlageflächen 51 bis 56 bzw. 51' bis 56' auf, wobei in Fahrstellung A des Außenrückblickspiegels 1 die benachbarten Anlageflächen 51, 51' bis 56, 56' jeweils eines Rastelementes 47 und der dazugehörigen Rastaufnahme 48 bereichsweise aneinander anliegen. Die Bezugszeichen 51 bis 56 sind den Rastelementen 47 zugeordnet, die Bezugszeichen 51' bis 56' den korrespondierenden Rastaufnahmen 48.

Eine statisch eindeutig definierte spielfreie Verbindung zwischen dem Spiegelkopf 4 und dem Spiegelfuß 3 ist dann gegeben, wenn am Spiegelkopf 4 und am Spiegelfuß 3 im Bereich der Rastelemente 47 bzw. der Rastaufnahmen 48 jeweils sechs schrägverlaufende Anlageflächen 51 bis 56 bzw. 51' bis 56' ausgebildet sind, wobei beide Bauteile 47, 48 nur an diesen sechs gemeinsamen Lagerstellen direkten Kontakt miteinander haben. Alle Anlageflächen 51 bis 56 an den Rastelementen 47 und alle Anlageflächen 51' bis 56' an den Rastaufnahmen 48 sind jeweils unter dem gleichen Winkel α gegenüber den angrenzenden vertikalen Wandabschnitten 49, 50 des Spiegelkopfes 4 bzw. des Spiegelfußes 3 angestellt. Der Winkel α beträgt im Ausführungsbeispiel etwa 45°. In der Draufsicht, also senkrecht zu der Hilfsebene B-B gesehen, sind die einzelnen Anlageflächen 51 bis 56 bzw. 51' bis 56' der Rastelemente 47 und der Rastaufnahmen 48 unter einem Winkel β zueinander angeordnet. Jede Anlagefläche 51 bis 56 bzw. 51' bis 56' kann einem separaten Rastelement 47 bzw. einer separaten Rastaufnahme 48 zugeordnet sein. Bei dieser nicht näher dargestellten Einzelanordnung sind zwei benachbarte Rastelemente 47 bzw. Rastaufnahmen 48 jeweils unter einem Winkel von etwa 60° zueinander angeordnet.

Von den sechs Anlageflächen 51 bis 56 bzw. 51' bis 56' der Rastelemente 47 bzw. der Rastaufnahmen 48 bilden jeweils zwei Anlageflächen 51, 52 und 53, 54 und 55, 56 bzw. 51', 52' und 53', 54' und 55', 56' der Rastelemente 47 bzw. der Rastaufnahmen 48 eine Funktionseinheit, wobei die beiden zugeordneten Anlageflächen entgegengesetzt geneigt und annähernd rechtwinkelig zueinander ausgerichtet sind (Winkel γ). Die etwa rechtwinkelig zueinander verlaufenden Anlageflächen einer Funktionseinheit der Rastelemente 47 bzw. der Rastaufnahmen 48 können aber auch zu einer Baueinheit 57, 58 zusammengefaßt sein. Das Bezugszeichen 57 ist den Rastelementen 47 und das Bezugszeichen 58 den Rastaufnahmen 48 zugeordnet.

Im Ausführungsbeispiel sind am Spiegelfuß 3 benachbart dem oberen und unteren Lagerauge 33 jeweils Rastaufnahmen 48 ausgebildet, die zwei rechtwinkelig zueinander ausgerichtete Anlageflächen 53', 54' bzw. 55', 56' aufweisen. Die beiden Anlageflächen 53', 54' bzw. 55', 56' bilden quasi eine V-förmige versenkte Mulde am freien Ende der ständerartigen Rastaufnahme 48. Die beiden Rastaufnahmen 48 verlaufen schräg zu vertikalen Schwenkachse 27 des Zwischengliedes 25. Die ständerartigen Rastelemente 47 sind entsprechend am Spiegelkopf 4 und zwar am Rahmenteil 13 ausgebildet.

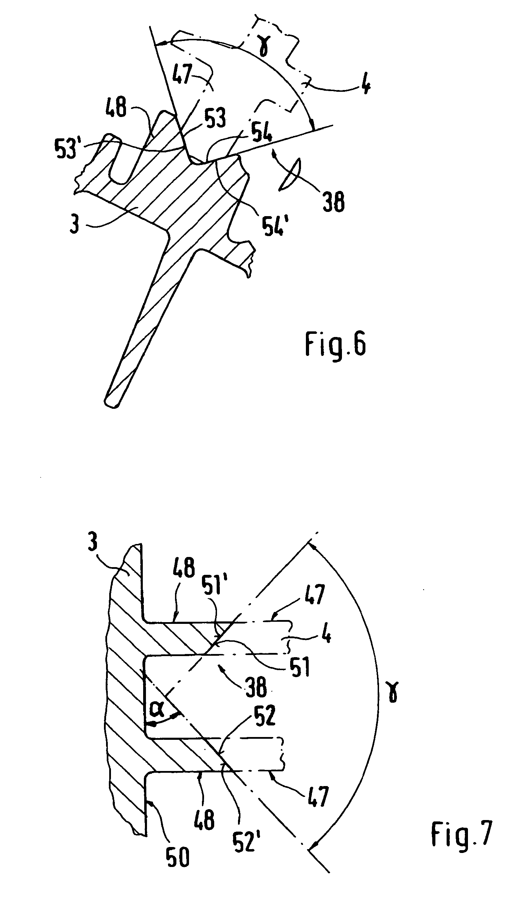

Benachbart der Schwenkachse 29 sind am Spiegelfuß 3 zwei in Höhenrichtung gesehen mit Abstand zueinander angeordnete Rastaufnahmen 48 ausgebildet, wobei die Anlagenflächen 51', 52' beider Rastaufnahmen 48 etwa rechtwinkelig zueinander ausgerichtet sind (Fig. 7). Zwischen den beiden beabstandeten Rastaufnahmen 48 lässt sich ein mit dem Verstellmechanismus 16 verbundener Kabelsatz hindurchführen. Die korrespondierenden Rastelemente 47 sind am Spiegelkopf 4 ausgebildet, wobei ein Rastelement 47 außerhalb und ein Rastelement 47 innerhalb des rahmenförmigen Zwischengliedes 25 angeordnet ist.

## Patentansprüche

1. Außenrückblickspiegel (1) für Fahrzeuge, insbesondere Personenkraftwagen mit einem am Fahrzeug zu befestigenden Spiegelfuß (3), einem relativ zum Spiegelfuß (3) verschwenkbaren Spiegelkopf (4), einem Zwischenglied (25), dessen eines Ende (28) über eine erste Schwenkachse (27) gelenkig mit dem Spiegelfuß (3) und dessen anderes Ende (28) über eine zweite Schwenkachse (29) gelenkig mit dem Spiegelkopf (4) verbunden ist und zumindest einem quer zu den Schwenkachsen verlaufenden Federelement (39), das in einer Fahrstellung (A) des Außenrückblickspiegels (1) den Spiegelkopf (4) gegen den Spiegelfuß (3) drückt, wobei zwischen dem Spiegelkopf (4) und dem Spiegelfuß (3) eine in mindestens zwei Ebenen wirksame, zentrierende Rasteinrichtung (38) vorgesehen ist, **dadurch gekennzeichnet, dass** in der Fahrstellung (A) des Außenrückblickspiegel (1) der Spiegelkopf (4) lediglich über die spielfrei und selbstzentrierend ausgebildete, in allen drei Ebenen (x-, y-, z-Ebene) wirksame Rasteinrichtung (38) und das zumindest eine Federelement (39) kraftübertragend mit dem Spiegelfuß (3) verbunden ist, dass die Rasteinrichtung (38) mehrere räumlich aufeinander abgestimmte Rastelemente (47) umfasst, die in der Fahrstellung (A) des Außenrückblickspiegels (1) in gegenseitigen Eingriff mit korrespondierenden Rastaufnahmen (48) stehen, wobei die Rastelemente (47) am Spiegelkopf (4) oder am Spiegelfuß (3) und die Rastaufnahmen (48) am jeweils anderen Bauteil angeordnet sind und dass die Rastelemente (47) und die zugeordneten Rastaufnahmen (48) an ihren freien, einander zugewandten Enden jeweils schrägverlaufende Anlageflächen (51 bis 56 bzw. 51' bis 56') aufweisen, wobei in der Fahrstellung (A) des Außenrückblickspiegels (1) die benachbarten Anlageflächen (51, 51' bis 56, 56') jeweils eines Rastelementes (47) und der dazugehörigen Rastaufnahme (48) aneinander anliegen.

2. Außenrückblickspiegel nach Anspruch 1, **dadurch gekennzeichnet, dass** jeweils sechs schrägverlaufende Anlageflächen (51 bis 56 bzw. 51' bis 56') an den Rastelementen (47) und den Rastaufnahmen (48) vorgesehen sind, die sich in Fahrstellung (A) des Außenrückblickspiegels (1) berühren.

3. Außenrückblickspiegel nach den Ansprüchen 1 und 2, **dadurch gekennzeichnet, dass** alle Anlageflächen (51 bis 56) an den Rastelementen (47) und alle Anlageflächen (51' bis 56') an den Rastaufnahmen (48) jeweils unter einem gleichen Winkel (α) gegenüber den angrenzenden vertikalen Wandabschnitten (49, 50) des Rastelementes (47) bzw. der Rastaufnahme (48) angestellt sind und dass die Anlageflächen (51, 56) der Rastelemente (47) und die Anlageflächen (51' bis 56') der Rastaufnahmen (48) senkrecht zu einer Hilfsebene (B-B) gesehen, unter einem Winkel (B) zueinander angeordnet sind.

4. Außenrückblickspiegel nach einem der vorangegangenen Ansprüche, **dadurch gekennzeichnet, dass** jeweils zwei miteinander eine Funktionseinheit bildende Anlageflächen (51, 52 und 53, 54 und 55, 56 bzw. 51', 52' und 53', 54' und 55',56') der Rastelemente (47) bzw. der Rastaufnahmen (48) annähernd rechtwinkelig zueinander ausgerichtet sind (Winkel γ).

5. Außenrückblickspiegel nach einem der vorangegangenen Ansprüche, **dadurch gekennzeichnet, dass** jede Anlagefläche (51 bis 56 bzw. 51' bis 56') einem separaten Rastelement (47) bzw. einer separaten Rastaufnahme (48) zugeordnet ist.

6. Außenrückblickspiegel nach einem der vorangegangenen Ansprüche, **dadurch gekennzeichnet, dass** zwei eine Funktionseinheit bildende, etwa rechtwinkelig zueinander ausgerichtete Anlageflächen der Rastelemente (47) bzw. der Rastaufnahmen (48) zu einer Baueinheit (57, 58) zusammengefasst sind.

7. Außenrückblickspiegel nach einem der vorangegangenen Ansprüche, **dadurch gekennzeichnet, dass** zwei benachbarte Baueinheiten (57, 58) etwa unter einem Winkel von annähernd 120° zueinander verlaufen.

8. Außenrückblickspiegel nach einem der vorangegangenen Ansprüche, **dadurch gekennzeichnet, dass** am Spiegelfuß (3) benachbart dem oberen und unteren Lagerauge (33) jeweils eine zwei rechtwinkelig zueinander ausgerichtete Anlageflächen (53', 54' bzw. 55', 56') aufweisende Rastaufnahme (48) ausgebildet ist.

9. Außenrückblickspiegel nach einem der vorangegangenen Ansprüche, **dadurch gekennzeichnet, dass** am Spiegelfuß (3) benachbart der Schwenkachse (29) zwei in Höhenrichtung gesehen mit Abstand zueinander angeordnete Rastaufnahmen (48) ausgebildet sind, wobei die Anlageflächen (51', 52') beider Rastaufnahmen (48) etwa rechtwinkelig zueinander ausgerichtet sind.

## Claims

1. An exterior rear view mirror (1) for vehicles, especially passenger vehicles, with a mirror base (3) for attachment to the vehicle, a mirror head (4) which is pivotable relative to the mirror base (3), an intermediate member (25), one end (28) [*sic recte* (26)] of which is connected in an articulated manner to the mirror base (3) via a first pivoting axis (27) and the other end (28) of which is connected in an articulated manner to the mirror head (4) via a second pivoting axis (29), and at least one spring member (39) which extends transversely to the pivoting axes and pushes the mirror head (4) against the mirror base (3) in a driving position (A) of the exterior rear view mirror (1), wherein a centring locking device (38) effective in at least two planes is provided between the mirror head (4) and the mirror base (3), **characterised in that**, in the driving position (A) of the exterior rear view mirror (1), the mirror head (4) is connected in a force-transmitting manner to the mirror base (3) only via the play-free, self-centring locking device (38), which is effective in all three planes (x, y, z plane), and the at least one spring member (39), **in that** the locking device (38) comprises a plurality of locking members (47) which are spatially adapted to one another and which, in the driving position (A) of the exterior rear view mirror (1), are in mutual engagement with corresponding locking receivers (48), wherein the locking members (47) are arranged on the mirror head (4) or on the mirror base (3) and the locking receivers (48) are arranged on the respective other component, and **in that** the locking members (47) and the associated locking receivers (48) each have obliquely extending contact surfaces (51 to 56 and 51' to 56' respectively) on their free, facing ends, wherein, in the driving position (A) of the exterior rear view mirror (1), the adjacent contact surfaces (51, 51' to 56, 56') of a respective locking member (47) and the associated locking receiver (48) lie against one another.

2. An exterior rear view mirror according to claim 1, **characterised in that** six respective obliquely extending contact surfaces (51 to 56 and 51' to 56') are provided on the locking members (47) and the locking receivers (48), which contact one another in the driving position (A) of the exterior rear view mirror (1).

3. An exterior rear view mirror according to claims 1 and 2, **characterised in that** all the contact surfaces (51 to 56) on the locking members (47) and all the contact surfaces (51' to 56') on the locking receivers (48) are set at the same angle (α) to the adjacent vertical wall portions (49, 50) of the locking member (47) or the locking receiver (48), and **in that** the contact surfaces (51, 56) of the locking members (47) and the contact surfaces (51' to 56') of the locking receivers (48) are arranged at an angle (β) to one another, seen perpendicularly to an auxiliary plane (B-B).

4. An exterior rear view mirror according to any one of the preceding claims, **characterised in that** two respective contact surfaces (51, 52 and 53, 54 and 55, 56 and 51', 52' and 53', 54' and 55', 56') of the locking members (47) and the locking receivers (48) are arranged approximately at right angles to one another (angle γ), which contact surfaces together form a functional unit.

5. An exterior rear view mirror according to any one of the preceding claims, **characterised in that** each contact surface (51 to 56 and 51' to 56') is associated with a separate locking member (47) or separate locking receiver (48).

6. An exterior rear view mirror according to any one of the preceding claims, **characterised in that** two contact surfaces of the locking members (47) and the locking receivers (48) are combined to form a structural unit (57, 58), which contact surfaces form a functional unit and are arranged approximately at right angles to one another.

7. An exterior rear view mirror according to any one of the preceding claims, **characterised in that** two adjacent structural units (57, 58) extend towards one another at an angle of approximately 120°.

8. An exterior rear view mirror according to any one of the preceding claims, **characterised in that** a respective locking receiver (48) having two contact surfaces (53', 54' and 55', 56') arranged at right angles to one another is formed on the mirror base (3) adjacent to the upper and the lower bearing eye (33).

9. An exterior rear view mirror according to any one of the preceding claims, **characterised in that** two locking receivers (48), which are arranged spaced apart when seen in the vertical direction, are formed on the mirror base (3) adjacent to the pivoting axis (29), wherein the contact surfaces (51', 52') of the two locking receivers (48) are arranged approximately at right angles to one another.

## Revendications

1. Rétroviseur extérieur (1) pour véhicules automobiles, notamment pour voiture particulière, comportant un socle (3), un boîtier (4) apte à pivoter par rapport au socle (3), une articulation (25), dont une extrémité (26) est assemblée de manière articulée avec le socle de rétroviseur (3) par l'intermédiaire d'un premier axe de pivotement (27) vertical et dont l'autre extrémité (28) est assemblée de manière articulée avec le boîtier de rétroviseur (4) par l'intermédiaire d'un deuxième axe de pivotement (29) vertical, et au moins un ressort (39), qui est orienté perpendiculairement aux axes de pivotement et qui, dans la position de conduite (A) du rétroviseur extérieur (1), pousse le boîtier de rétroviseur (4) contre le socle de rétroviseur (3), un système de blocage (38), exerçant une action de centrage dans au moins deux plans, étant prévu entre le boîtier de rétroviseur (4) et le socle de rétroviseur (3), **caractérisé en ce que**, dans la position de conduite (A) du rétroviseur extérieur (1), le boîtier de rétroviseur (4) est relié, de manière à transmettre les forces, au socle de rétroviseur (3) uniquement par l'intermédiaire du système de blocage (38), réalisé sans jeu et auto-centrant, actif dans les trois plans (plans x, y, z) et par l'intermédiaire dudit au moins un ressort (39), **en ce que** le système de blocage (38) comporte une pluralité d'éléments de blocage (47) adaptés les uns aux autres, lesquels, dans la position de conduite (A) du rétroviseur extérieur (1), sont en prise réciproque avec des logements (48) correspondants, les éléments de blocage (47) étant réalisés sur le boîtier de rétroviseur (4) ou sur le socle de rétroviseur (3) et les logements (48) correspondants étant réalisés respectivement sur l'autre partie, et **en ce que** les éléments de blocage (47) et les logements (48) correspondants comportent chacun sur leurs extrémités libres, orientées les unes vers les autres, des surfaces de contact (51 à 56 et 51' à 56') inclinées, les surfaces de contact (51, 51' à 56, 56') adjacentes de chaque élément de blocage (47) et de chaque logement (48) correspondant étant en appui les unes contre les autres dans la position de conduite (A) du rétroviseur extérieur (1).

2. Rétroviseur extérieur selon la revendication 1, **caractérisé en ce que** respectivement six surfaces de contact (51 à 56 et 51' à 56') inclinées sont prévues sur les éléments de blocage (47) et les logements (48), lesquelles entrent en contact dans la position de conduite (A) du rétroviseur extérieur (1).

3. Rétroviseur extérieur selon les revendications 1 et 2, **caractérisé en ce que** toutes les surfaces de contact (51 à 56) sur les éléments de blocage (47) et toutes les surfaces de contact (51' à 56') sur les logements (48) sont inclinées chacune avec le même angle (α) par rapport aux parois verticales (49, 50) adjacentes de l'élément de blocage (47) et du logement (48), et **en ce que** les surfaces de contact (51 à 56) des éléments de blocage (47) et les surfaces de contact (51' à 56') des logements (48) sont disposées perpendiculairement par référence à un plan auxiliaire (B-B) en formant entre elles un angle (β).

4. Rétroviseur extérieur selon l'une quelconque des revendications précédentes, **caractérisé en ce que** respectivement deux surfaces de contact (51, 52 et 53, 54 et 55, 56) des éléments de blocage (47) et deux surfaces de contact (51', 52' et 53', 54' et 55', 56') des logements (48), formant entre elles une unité fonctionnelle, sont orientées à peu près à angle droit l'une par rapport à l'autre (angle γ).

5. Rétroviseur extérieur selon l'une quelconque des revendications précédentes, **caractérisé en ce que** chaque surface de contact (51 à 56 et 51'à 56') est associée à un élément de blocage (47) séparé et à un logement (48) séparé.

6. Rétroviseur extérieur selon l'une quelconque des revendications précédentes, **caractérisé en ce que** deux surfaces de contact, formant une unité fonctionnelle et orientées perpendiculairement l'une à l'autre, sur les éléments de blocage (47) et les logements (48) sont regroupées pour former une unité de montage (57, 58).

7. Rétroviseur extérieur selon l'une quelconque des revendications précédentes, **caractérisé en ce que** deux unités de montage (57, 58) adjacentes sont orientées l'une par rapport à l'autre en formant sensiblement un angle de 120° environ.

8. Rétroviseur extérieur selon l'une quelconque des revendications précédentes, **caractérisé en ce que** sur le socle de rétroviseur (3), à proximité de l'orifice de positionnement supérieur et inférieur (33) est réalisé respectivement un logement (48) comportant deux surfaces de contact (53', 54' et 55', 56') orientées perpendiculairement l'une à l'autre.

9. Rétroviseur extérieur selon l'une quelconque des revendications précédentes, **caractérisé en ce que** sur le socle de rétroviseur (3), à proximité de l'axe de pivotement (29) sont réalisés deux logements (48), agencés à distance l'un de l'autre dans la direction verticale, les surfaces de contact (51', 52') des deux logements (48) étant orientées sensiblement perpendiculairement l'une à l'autre.
